# DEMANDE DE BREVET EUROPEEN

(11) **EP 4 063 335 A1**
(43) Date de publication de la demande: **28.09.2022**
(21) Numéro de dépôt: 22153262.5
(22) Date de dépôt: 05.11.2019
(51) Int. Cl.: C04B 2/06, C01F 11/02, C04B 28/10

(54) **LAIT DE CHAUX**

(30) Priorité: 07.11.2018 BE 201805774
(62) Demande divisionnaire de: 19795579.2
(71) Demandeur: Carmeuse Research And Technology, 1348 Louvain-La-Neuve (BE)
(72) Inventeur: DEWAGHE, Céline, 6110 MONTIGNY LE TILLEUL (BE); VEKONY, Nicolas, 1450 CHASTRE (BE); PONCHON, François, 1180 UCCLE (BE)
(74) Mandataire: AWA Benelux

(57) **Abrégé**

La présente invention se rapporte à lait de chaux comportant :
- au moins 50 % en poids de matière sèche constituée de chaux hydratée ;
- 0,1 à 3 % en poids sec de dispersants carbohydrates sélectionnés parmi le groupe des monosaccharides, disaccharides, oligosaccharides, leur forme alcoxydée et leurs dérivés obtenus par oxydation ou hydrogénation,
- 0,1 à 3 % en poids sec d'un dispersant de la famille des copolymères polyéthers polycarboxyliques obtenus par la copolymérisation de monomères insaturés ethyleniques ayant entre 15 et 100 moles de groups oxyalkyléniques C2-C3 et des monomères insaturés éthyléniques d'acides mono ou dicarboxyliques, et/ou leurs sels et/ou leurs esters alkyles C1-C4 dans lequel la proportion entre le dispersant de type carbohydrate et le dispersant de type copolymère est compris entre 5:1 et 1:1 et de préférence 3:1 et 1:1 ;
la distribution de particules de chaux hydratée étant caractérisée par :
- au moins 99 % des particules ayant une taille inférieure à 100 µm, de préférence 75 µm ;
- au moins 75 % des particules ayant une taille supérieure à 1,2 µm.
- ledit lait de chaux produisant une décantation inférieure à 2 % après 24 h de repos,

## Description

### Objet de l'invention

La présente invention se rapporte à un lait de chaux (LDC), en particulier une suspension hautement concentrée en chaux et stable dans le temps.

### Etat de la technique

Les laits de chaux sont bien connus de l'état de la technique. Il s'agit d'une suspension colloïdale d'hydroxyde alcalino-terreux avec des concentrations en matière sèche aux alentours de 15 à 35 % en masse par masse de lait de chaux. Cette suspension est obtenue soit par extinction de chaux calcique CaO (chaux vive) ou de chaux dolomitique (Ca,Mg)O avec un excès d'eau, soit par mélange d'hydroxyde de calcium Ca(OH)₂ (chaux éteinte, hydrate de calcium) ou de chaux dolomitique partiellement ou complètement hydratée avec de l'eau, soit à partir d'une dilution de pâte d'hydroxyde de calcium ou de chaux. Les matières premières contiennent naturellement des impuretés comme par exemple de la silice, de l'alumine ou encore de l'oxyde de fer à raison de quelques pourcents.

Le lait de chaux est utilisé dans de nombreuses applications en qualité de réactif chimique comme par exemple dans le traitement et la dépollution des eaux potables, des eaux usées et des boues ainsi que dans la neutralisation des rejets acides et l'ajustement du pH dans le domaine de la chimie ou des non ferreux. Elle est aussi utilisée dans la dépollution des fumées acides ou encore dans le secteur de la construction ou de l'agriculture. L'avantage d'utiliser la chaux sous forme de lait de chaux réside dans le fait qu'elle se trouve alors dans un média liquide ce qui permet d'une part une incorporation et une réaction plus facile et limite voire élimine les émissions de poussière qui pourraient poser problème dans certaines conditions d'utilisation.

La concentration en matière sèche du lait de chaux est une caractéristique importante car elle permet de mieux maîtriser la quantité d'eau impliquée dans les utilisations. Certaines applications nécessitent en effet une concentration en réactifs optimale pour permettre une parfaite réaction de la chaux ou simplement pour diminuer l'énergie nécessaire pour éliminer l'eau après utilisation. C'est le cas par exemple de l'utilisation du lait de chaux pour la coagulation et la floculation des particules en suspension puis leur déshydratation. La quantité d'eau a également un impact très significatif sur le volume à transporter, à stocker et à manipuler induisant des contraintes techniques et économiques importantes. L'utilisateur a donc intérêt à maximiser cette matière sèche lors du transport et du stockage pour diminuer ses coûts.

La réactivité, la sédimentation et la viscosité sont des propriétés du lait de chaux directement influencées par sa concentration en matière sèche et par sa granulométrie.

Un lait de chaux est composé de particules individuelles d'hydroxyde de calcium dont la tendance à la sédimentation est dépendante de la taille des particules en suspension, de la concentration en matière solide et de la viscosité du lait de chaux. Outre ces paramètres, la porosité des grains de chaux et/ou d'hydrate ainsi que les charges électrostatiques des particules jouent un rôle dans la sédimentation.

La viscosité ou le comportement rhéologique des laits de chaux est une caractéristique intrinsèque influencée par leur concentration en matières sèches. Des laits de chaux de concentration inférieure à 20 % en matière sèche se comportent comme des fluides newtoniens où les contraintes de cisaillement sont proportionnelles au gradient de vitesse. Pour des concentrations supérieures à 20 %, on assiste à un comportement non-newtonien de type visco-élastique, voire Binghamien. Le comportement d'un tel corps se traduit par un état élastique lorsque le seuil de cisaillement est inférieur à une valeur critique et un comportement plastique lors du dépassement de ce seuil de cisaillement. Ce comportement est généralement lié à l'existence d'une structure tridimensionnelle, qui ne se rompt que si on exerce une force assez grande. Donc si la contrainte appliquée au fluide est inférieure à la contrainte seuil, aucune déformation ne se produit, le fluide ne coule pas. Il faut attendre la contrainte minimale pour provoquer l'écoulement.

Par ailleurs, d'autres effets rhéologiques souvent irréversibles sont constatés avec le vieillissement des suspensions. Elles proviennent notamment de variations de la surface spécifique, du système cristallin de Ca(OH)₂, de la sédimentation des grosses particules, et de la réagglomération des particules entre-elles. Un lait de chaux stable est peu tributaire de ce vieillissement, ses caractéristiques intrinsèques, comme la viscosité, évoluent peu.

La viscosité du lait de chaux et sa stabilité sont des caractéristiques fondamentales pour sa mise en œuvre, son utilisation et sa manipulation : préparation, conditionnement, transport, écoulement, pompage, ... Dans la littérature, on parle de suspension « pompable ». Leur niveau de viscosité doit être tel que leur agitation (maintien de la suspension sans décantation, ré-homogénéisation, remise en suspension) et leur déplacement (transport en conduite, pompage) soient possibles. Expérimentalement, cette « pompabilité » est rencontrée lorsque la viscosité dynamique des suspensions est inférieure à 2000 cP, de préférence inférieure à 1500 cP (la viscosité dynamique est exprimée en centiPoise ou mPa.s, mesurée à une vitesse de cisaillement de 5 s⁻¹) Cependant parfois certains paramètres doivent être adaptés en fonction du dimensionnement des installations (cuves, type d'agitation, tuyauteries de transport, etc.).

De façon générale, la viscosité des laits de chaux augmente lorsque la concentration en matière sèche augmente, que la taille des particules en suspension diminue et que la surface spécifique des matières en suspension est élevée. Il est difficile de préparer des laits de chaux concentrés de faible viscosité et dont la taille des particules est faible avec une teneur en matière sèche supérieure à environ 30 %.

Par ailleurs, la plupart des laits de chaux ne sont naturellement pas stables dans le temps. L'instabilité de la suspension se manifeste par une augmentation importante de leur viscosité, de leur seuil de cisaillement et de leur viscosité plastique. La phase de vieillissement des suspensions s'opère soit dans des conditions stationnaires (correspondant à une phase de repos), soit dans des conditions dynamiques (correspondant à une phase d'agitation ou sous cisaillement), soit dans des conditions mixtes (correspondant à des phases alternées repos-agitation). Le vieillissement en conditions stationnaires s'accompagne également d'une sédimentation plus ou moins rapide en fonction de la taille des particules générant ponctuellement une concentration encore plus élevée en matière sèche.

Les phases de vieillissement des suspensions reflètent des pratiques industrielles courantes (englobant des phases de production; de stockage, de transport, de pompage, etc.). Les phases d'agitation évitent une sédimentation néfaste à une utilisation optimale du produit. Ces comportements rhéologiques sont d'autant plus marqués que le temps, les contraintes de cisaillement et la concentration en matière sèche augmentent. Ils sont dépendants de la nature même de la matière première mais aussi de la finesse des particules d'hydrate : les particules grossières (dizaines de µm) sont stables mais ont plus tendance à sédimenter, les particules fines (moins de 10 µm) sont en général moins stables mais résistent plus longtemps à la sédimentation.

Le changement de comportement rhéologique des laits de chaux, notamment lorsque qu'ils sont hautement concentrés, génère de nombreux inconvénients parmi lesquels, l'impossibilité de les agiter et de les transporter lors d'une augmentation de la viscosité dynamique, du seuil de cisaillement et de la viscosité plastique ce qui engendre souvent des dommages aux équipements (tuyauterie, pompe, mobile d'agitation, moteur, usures prématurées des mobiles d'agitation, ...) et des coûts énergétiques importants. Il est donc crucial de solutionner le problème de stabilité des suspensions susceptible d'être commercialisées.

Afin de stabiliser les laits de chaux de nombreux dispersants utilisés dans d'autres applications ont été suggérés comme des acides acryliques, méthacryliques ou encore des polyélectrolytes cationiques et amphotères possédant des groupes contenant de l'azote comme des polyamines, polymères de chlorure de dimethyl diallyl ammonium, polyphosphates. Ces agents améliorent la fluidité des suspensions concentrées de Ca(OH)₂ mais provoquent souvent une élévation brutale et incontrôlable de la viscosité dans le sens ou cette dernière augmente fortement au cours du temps.

D'autres familles de dispersants ont été décrits, comme des dérivés de polysaccharides solubles dans l'eau tels que la cellulose partiellement hydrolysée contenant des groupes carboxyle et/ou des groupes hydroxyalkyle et/ou sulfate, de l'amidon partiellement hydrolysé contenant une grande proportion en amylose et des groupes sulfoalkyle avec 1 à 4 atomes de carbone. Ces additifs ont une faible viscosité et un pouvoir plastifiant sur les suspensions minérales incluant ciment, chaux ou plâtre. Il a été démontré que le fructose et quelques mono- et disaccharides réduisaient la viscosité des suspensions aqueuses de chaux.

Le document EP 0 313 483 divulgue divers polyacrylates (polymère et/ou copolymère éthylènique hydrosoluble) qui ajoutés à raison de 500 à 20.000 ppm comme agents de broyage, permettent la préparation des suspensions aqueuses de chaux microparticulaires, hautement concentrées en matière sèche, de viscosités faibles et stables, et dont les particules ont la dimension souhaitée et une réactivité très améliorée.

Le document EP 1 292 538 B1 divulgue des compositions comprenant une pâte aqueuse d'hydroxyde de calcium renfermant entre 25 et 65 % en poids de particules solides, un polymère acide ou un sel soluble dans l'eau et un co-additif à base de toute une série de sels possibles.

Le document WO 01/96240 A décrit l'utilisation des polysaccharides anioniques (dérivés de polysaccharides obtenus par oxydation, par exemple les dérivés d'inuline) comme additif de stabilisation de la viscosité de suspensions de lait de chaux calcique.

Le document EP 1 999 082 B1 décrit l'utilisation de glucides choisis parmi les monosaccharides, les disaccharides, les oligosaccharides ou les dérivés de glucides obtenus par oxydation ou par hydrogénation comme additif de stabilisation de la viscosité de suspensions de lait de chaux calcique et/ou magnésienne.

Le document WO 2006/050567 divulgue un lait de chaux de faible viscosité qui utilise une combinaison de sirop de glucose et de copolymères de polycarboxylate en tant que dispersants.

Le document US 2018/0065887 A1 divulgue un lait de chaux concentré stabilisé dans le temps dans certaines conditions de pH et de taille moyenne de particules par un additif dispersant de type polycarboxylate.

Aucune des solutions proposées ne convient pour maintenir la stabilité des suspensions de laits de chaux hautement concentrés au cours du temps, et pour toutes les conditions rencontrées dans les milieux industriels.

### Buts de l'invention

La présente invention vise à fournir un lait de chaux hautement concentré en matière sèche avec un maintien des caractéristiques rhéologiques stables au cours du temps (comme la viscosité dynamique, le seuil de cisaillement ou la viscosité plastique et la sédimentation) et à des niveaux compatibles avec leur manipulation optimale au cours du temps dans des conditions stationnaires, dynamiques ou mixtes. Au terme d'une période habituelle de vieillissement, ces caractéristiques doivent donc être peu altérées.

### Résumé de l'invention

La présente invention divulgue un lait de chaux comportant :
- au moins 40 % en poids de matière sèche constituée de chaux hydratée ;
- 0,1 à 3 % en poids sec de dispersants carbohydrates sélectionnés parmi le groupe des monosaccharides, disaccharides, oligosaccharides, leur forme alcoxydée et leurs dérivés obtenus par oxydation ou hydrogénation ;
- 0,1 à 3 % en poids sec d'un dispersant de la famille des copolymères polyéthers polycarboxyliques obtenus par la copolymérisation de monomères insaturés ethyleniques ayant entre 15 et 100 moles de groups oxyalkyléniques C2-C3 et des monomères insaturés éthyléniques d'acides mono ou dicarboxyliques, et/ou leurs sels et/ou leurs esters alkyles C1-C4 dans lequel la proportion entre le dispersant de type carbohydrate et le dispersant de type copolymère est compris entre 5:1 et 1:1 et de préférence 3:1 et 1:1 ;
la distribution de particules de chaux hydratée étant caractérisée par :
- au moins 99 % des particules ayant une taille inférieure à 100 µm, de préférence 75 µm;
- au moins 75 % des particules ayant une taille supérieure à 1,2 µm ;

Les modes d'exécution préférés de l'invention comportent au moins une, ou une combinaison quelconque appropriée des caractéristiques suivantes :
- La distribution des particules de chaux hydratée est caractérisée par :
   - au moins 90 % des particules ayant une taille inférieure à 50 µm ;
   - au moins 90 % des particules ayant une taille supérieure ou égale à 0,8 µm.
- La distribution des particules de chaux hydratée est caractérisée par :
   - au moins 90 % des particules ayant une taille inférieure à 50 µm;
   - au moins 50 % des particules ayant une taille inférieure à 15 µm, de préférence inférieure à 8 µm ;
   - au moins 90 % des particules ayant une taille supérieure ou égale à 0,8 µm.
- La proportion de matière sèche est comprise entre 45 et 60 % en poids, ledit lait présentant une viscosité mesurée à 25 °C avec un taux de cisaillement de 5 s-1 inférieure à 1500 cP (1,5 Pa.s), de préférence inférieure à 1300 cP (1,3 Pa.s) après 14 jours de vieillissement.
- La proportion de matière sèche est comprise entre 45 et 60 % en poids présentant une viscosité mesurée à 25 °C avec un taux de cisaillement de 5 s-1 sur le lait de chaux frais, inférieure à 800 cP (0.8 Pa.s), de préférence inférieure à 600 cP (0.6 Pa.s).
- Le copolymère polyéthers polycarboxylique est le produit de réaction d'au moins un monomère éthylénique insaturé comprenant:
   - entre 75 and 95 % molaire de C1-C3 alkoxypolyoxyalkylene (meth)acrylate et C1-C3 alkoxypolyoxyalkylene maléate dans lesquels le degré de polymérisation de l'oxyalkylene est compris entre 15 and 100, de préférence entre 20 et 50;
   - entre 5 et 25 % molaire d'acide (méth)acrylic, acide itaconique, acide crotonique, acide maléique, acide fumarique et les sels d'ammonium et de leurs métaux alcalins.
- L'alkoxypolyoxyalkylene du copolymère dispersant comprend des unités oxyalkylene sélectionné parmi l'oxyethylene et l'oxypropylene.
- L'alkoxypolyoxyalkylene du copolymère dispersant comprend des unités oxyalkylene sélectionné parmi l'oxyethylene et l'oxypropylene comprenant de 5 à 95 unités d'oxyethylene et de 5 à 95 unités d'oxypropylene.
- Le groupe acide du copolymère est obtenu par la copolymérisation d'acide (meth) acrylique.
- Le dispersant de type copolymère a une masse moléculaire moyenne en poids comprise entre 10 000 et 100 000 g/mol, de préférence entre 10 000 et 60 000 g/mol mesuré par chromatographie de perméation sur gel dans le tétrahydrofuranne par rapport à des standards de polystyrène.
- La polydispersité de la masse moléculaire dudit copolymère est comprise entre 1,1 et 1,6, de préférence entre 1,3 et 1,4.
- Le dispersant de type copolymère a une viscosité moyenne comprise entre 0,2 et 1 Pa.s, de préférence entre 0,3 et 0,8 Pa.s et de manière particulièrement préférée entre 0,3 et 0,6 Pa.s mesurée à 25°C avec un taux de cisaillement compris entre 0,1 et 400 s-1.

La présente invention divulgue également un procédé de préparation d'un lait de chaux selon lequel on met en contact un liquide comportant les dispersants et une chaux vive ou hydratée permettant d'obtenir un lait de chaux selon l'invention et son utilisation pour la neutralisation des rejets acides, en particulier dans les fumées et le traitement des boues.

### Description détaillée de l'invention

Les producteurs tentent d'optimiser les paramètres du lait de chaux depuis de nombreuses années. L'augmentation de la quantité de matière sèche (MS) s'accompagne d'une augmentation exponentielle de la viscosité du produit, rendant impossible toute manipulation ultérieure à l'aide d'équipements généralement utilisés pour la manipulation de liquides dans l'industrie.

La présente invention divulgue un lait de chaux à haute concentration en matière sèche avec des caractéristiques de viscosité et de sédimentation suffisamment stables dans le temps pour une utilisation optimale.

Il existe deux types d'additifs qui permettent de contrôler et stabiliser la viscosité des laits de chaux : Les additifs travaillant par chemisorption et les additifs travaillant par effet d'encombrement stérique et/ou d'absorption électrostatique. La chemisorption permet de stabiliser le produit à long terme alors que l'effet d'encombrement stérique et/ou d'absorption électrostatique permet de diminuer la viscosité des laits de chaux par effet dispersant.

Selon la présente invention, au moins deux types d'additifs sont utilisés dont l'effet s'est avéré synergique. Il s'agit plus particulièrement d'additifs appartenant à la famille des carbohydrates et à celle des copolymères ionomères, de préférence de type polyéthers polycarboxylates, les deux s'associant dans des proportions optimisées.

Les laits de chaux décrits dans la présente invention consistent en des suspensions dont la teneur en matière sèche est comprise entre 40 et 65 %, de préférence entre 45 et 65 % exprimé en masse de matière sèche par rapport à la masse de lait de chaux.

Les laits de chaux selon la présente invention peuvent être préparés par différentes méthodes:
1. par extinction de chaux calciques et/ou de chaux dolomitiques;
2. à partir de chaux hydratée et/ou de chaux dolomitique hydratée en poudre;
3. par dilution de pâte d'hydrates de calcium et/ou magnésium.

Ces matières premières contiennent naturellement des impuretés (silice, alumine, ...). Le liquide utilisé pour la suspension est principalement de l'eau. D'autres solvants, non-aqueux, peuvent être envisagés, ainsi que des mélanges de solvants non-aqueux ou encore des mélanges d'eau et de solvant(s) non-aqueux.

Les particules de matières solides en suspension d'hydroxydes alcalino-terreux répondent à la formule générale a Ca(OH)₂.b Mg(OH)₂. c MgO·en suspension dans de l'eau dans laquelle a, b et c sont des fractions molaires avec a+b+c compris entre 90 et 100%; « a » aura de préférence une valeur entre 80 % et 100 %, avantageusement une valeur de 100 %.

Il est préférable d'avoir un lait de chaux caractérisé par une fine distribution granulométrique, assurant une plus longue suspension des particules (sédimentation moins rapide) et une meilleure réactivité chimique. La suspension présente une distribution de la taille des particules en suspension dont la taille maximum représentée par D99 est inférieure à 150 µm, ou de préférence égale ou inférieure à 100 µm, une taille moyenne des particules représentée par D90 inférieure à 70 µm, de préférence inférieure à 50 µm et une taille moyenne des particules représentée par D50 inférieure à 15 µm, de préférence inférieure à 10 µm, voire à 8 µm de préférence accompagnée d'une taille moyenne des particules représentée par D25 supérieure à 1 µm, de préférence 1,2 µm accompagnée d'une taille moyenne des particules représentée par D10 supérieure ou égale à 0,5 µm, de préférence 0,8 µm. Les distributions D99, D90 D50, D25 et D10 correspondent aux dimensions pour lesquelles respectivement 99 %, 90 %, 50 %, 25 % ou 10 % des particules en volume (ou en masse) sont, selon spécification, inférieures ou supérieures aux dites dimensions. Afin d'ajuster leur granulométrie, ces laits de chaux sont susceptibles d'être soumis à un broyage (par exemple de type à perles), tamisage (par exemple sur toile) ou tout autre moyen de réduction de leur granulométrie.

La distribution de la taille des particules (PSD - Particle Size Distribution) est exprimée en pourcentage cumulé de passants en fonction du diamètre des particules et mesurée par diffraction laser (calculée selon la méthode de Fraunhofer et/ou Gustav Mie). Les distributions caractérisées par les termes D99 à D10, sont des valeurs interpolées de la courbe de distribution de la taille des particules. L'appareil utilisé est un Sympatec, analyseur HELOS (H2968) avec une lentille dite « R4 » pour l'analyse des produits entre 1,8 et 350 µm.

De préférence, le lait de chaux selon la présente invention est caractérisé par un taux de matière sèche d'au moins 40 %, de préférence au moins 45 % et d'une viscosité sur produit frais inférieure à 800 cP (0,8 Pa.s), de préférence inférieure à 600 cP (0,6 Pa.s) et d'une viscosité sur vieilli inférieur à 2000 cP (2 Pa.s), de préférence inférieure à 1500 cP, (1,5 Pa.s), et même 1300 cP (1,3 Pa.s).

Les viscosités du lait de chaux selon la présente invention sont mesurées sur un viscosimètre "Thermo Fischer Rheostress 6000" avec cryostat "Haake C 25" équipé d'un cylindre calibré et d'un spindle (rotor) "Haake Z 40" à un taux de cisaillement (c.-à-d. vitesse de cisaillement) de 5 s⁻¹. Le principe de la mesure est bien connu et est basé sur l'introduction d'un spindle (rotor) plongeant dans un récipient cylindrique calibré contenant le lait de chaux à analyser à une température de 25°C. Lorsque le spindle (rotor) tourne dans le lait de chaux, ce dernier oppose une résistance à la rotation du fait de sa viscosité. Le protocole de mesure comporte une augmentation de la vitesse de rotation suivie d'une descente progressive de la vitesse de rotation du spindle (rotor) permettant d'opérer une hystérèse de viscosité en fonction du taux de viscosité. Dans le protocole de la présente invention, le résultat de la mesure de viscosité est obtenu en faisant la moyenne des viscosités correspondant à un taux de cisaillement de 5 s-1 mesurées respectivement dans une phase d'augmentation et une phase de diminution de la vitesse du spindle (rotor).

Parmi les additifs de type carbohydrates utilisés dans la présente invention, on distingue les monosaccharides, les disaccharides, les oligosaccharides et les polysaccharides. Ils sont décrits de manière détaillée dans le document EP 1 999 082 A1.

Parmi les monosaccharides, on cite à titre d'exemple : érythrose, thréose, xylose, ribose, allose, glucose, galactose, fructose, mannose.

Parmi les disaccharides, sont cités à titre d'exemple : saccharose (ou sucrose), lactose, maltose, tréhalose.

Parmi les polysaccharides, on cite à titre d'exemple : l'amidon, l'amidon modifié, l'amidon hydrolysé, le glycogène, l'inuline, l'inuline modifiée, la cellulose, la cellulose modifiée, les pectines, les dextrines et cyclodextrines.

Parmi les carbohydrates modifiés, sont considérés les polyols qui sont des formes hydrogénées. A titre d'exemple, on cite sorbitol (ou glucitol), érythritol, xylitol, lactitol, maltitol.

La famille des polyéthers polycarboxyliques comporte notamment des co et terpolymères acryliques. Cette famille de polymères est décrite de manière détaillée dans les documents EP 2 920 128 A1 et EP 2 920 129 A1 ; les produits commerciaux de ce type de polymères sont disponibles par exemple sous le nom de Rheosperse^{™} d'Arkema.

Chacun des additifs, utilisés en combinaison, entrent dans la composition des laits de chaux en vue de la présente invention à raison de 0,1 à 3 % et de manière préférée de 0.1 à 2 % en poids. Leur concentration est liée à la concentration de matière sèche. Plus la concentration de matière sèche est élevée, plus la concentration des deux additifs doit être élevée. Pour des concentrations en matière sèche de 35 à 40, on pourra travailler avec des valeurs de 0,1 à 0,3 de chacun des additifs, alors que pour des concentrations en matière sèche de 50 à 60 % on travaillera plutôt avec des concentrations de l'ordre de 0,7 à 1.5 %.

Le pourcentage d'additif est exprimé en poids de matière sèche de l'additif par rapport à la teneur totale en matière sèche en masse dans le lait de chaux. Pour un kilogramme de lait de chaux concentré à 50 % de matière sèche, et qui contient donc 500 g d'hydrate de calcium et d'impuretés, 2 % en poids d'additif représentent donc 10 g de matière sèche supplémentaire et donc 510 g de matière sèche par kilogramme de LDC.

Cette proportion polyether polycarboxylates/carbohydrates ne dépendra pas seulement de la concentration en matière sèche mais également de la nature des matières premières, et des conditions de vieillissement, etc. Un ajustement de la concentration en additif a pour but de répondre au critère de stabilité de la rhéologie des laits de chaux. Il convient en effet de satisfaire aux exigences du fabricant, du client et aux conditions d'utilisation. Cette concentration est à minimiser notamment pour des raisons économiques.

Le choix d'un ou de plusieurs additifs utilisés en mélange, peut aussi être conditionné par l'application. Certaines applications rencontrent des exigences strictes en matière de compatibilité alimentaire, de respect de normes environnementales, de compatibilité de procédé, etc. D'autres critères comme des critères économiques, de disponibilité, de conditionnement, de facilité de mise en œuvre, peuvent également guider ce choix.

De façon générale, les additifs relatifs à l'invention entrent dans la composition du lait de chaux de plusieurs manières. Le recours à ces additifs ne porte en rien préjudice à la préparation des laits de chaux et il a l'avantage d'être modulable. Ils peuvent en effet être introduits en une étape ou en plusieurs étapes, au cours des différentes phases du conditionnement des matières premières ou durant la préparation des laits de chaux de la présente invention.

A titre d'exemple, ces étapes sont l'hydratation ou l'extinction de la chaux, le broyage de la chaux et/ou de l'hydrate, la préparation du lait de chaux, le stockage, le transport, etc. De façon détaillée, le procédé de préparation de lait de chaux stable en ce qui concerne l'évolution des caractéristiques rhéologiques au cours du temps, peut s'envisager dans des conditions stationnaires, dynamiques ou mixtes (par alternance d'une ou plusieurs phases stationnaires et dynamiques). Ce procédé peut ainsi se faire par :
a. l'incorporation par mélange d'un des additifs solides ou d'une solution aqueuse, dans un lait de chaux préparé au préalable;
b. l'incorporation par mélange d'un additif solide ou d'une solution aqueuse, dans le liquide de préparation du lait de chaux et ensuite incorporation par mélange de la chaux éteinte;
c. l'incorporation par mélange d'un additif solide ou d'une solution aqueuse, dans le liquide de préparation du lait de chaux servant à éteindre la chaux vive (CaO ou chaux dolomitique) et éteindre la chaux avec ce liquide;
d. le mélange de chaux éteinte sèche anhydre (ou de chaux-dolomitique) avec un additif solide et mise en suspension du mélange dans l'eau ;
e. le mélange d'un additif solide avec de la chaux vive (CaO ou chaux dolomitique) et extinction de la chaux vive avec de l'eau ;
f. l'imprégnation de chaux éteinte sèche anhydre (ou de chaux-dolomitique) avec une solution aqueuse, d'un additif solide;
g. l'imprégnation de chaux vive (CaO ou de chaux dolomitique) avec une solution aqueuse, d'un additif solide ;

### Protocole de préparation des exemples

- préparation d'un mélange d'eau et d'additifs dans des proportions précises
- agitation avec un agitateur à hélices à une vitesse de 300 tpm durant quelques minutes
- pesée et ajout progressif de la chaux hydratée en maintenant l'agitation pendant 15 à 20 minutes

### Mesures des caractéristiques du lait de chaux :

- mesure de la matière sèche : par suivi de la perte de masse dans une balance infrarouge
   - mesure de la viscosité dynamique sur frais : mesure de la viscosité du lait de chaux à l'aide d'un viscosimètre de type "Thermo Fischer Rheostress 6000" avec cryostat "Haake C 25" équipé d'un cylindre calibré et d'un spindle (rotor) "Haake Z 40" à un taux de cisaillement de 5 s-1 et à 25 °C dans l'heure qui suit sa fabrication
   - mesure de la viscosité dynamique sur vieilli : Le lait de chaux est laissé en stockage dans une cuve. Il est agité 5 minutes toutes les heures pour éviter que la décantation n'entraine la prise en masse de l'hydrate dans le bas de la cuve et ne bouche les conduits de transport de lait de chaux. Une viscosité est réalisée sur un échantillon au bout de 14 jours, à l'aide du viscosimètre de type "Thermo Fischer Rheostress 6000" avec cryostat "Haake C 25" équipé d'un cylindre calibré et d'un spindle (rotor) "Haake Z 40" à un taux de cisaillement de 5 s-1 et à 25 °C
- mesure de la décantation : mesuré en laissant un échantillon de lait de chaux au repos pendant 24 heures dans un cylindre gradué de 250 ml et détermination du volume de surnageant par rapport au volume initial qui doit être le plus faible possible. Un lait de chaux est considéré comme problématique dès que la décantation est supérieure à 25 %.

### Séries d'essais

### Série d'essai 1 : Relation viscosité et décantation en fonction de la matière sèche

Des laits de chaux avec différentes teneurs en matière sèche ont été préparés selon la méthode décrite ci-dessus, mais sans additif favorisant la dispersion. Un hydrate standard a été utilisé, appelé S97 dont les caractéristiques principales sont reprises dans le Tableau 1. Les viscosités sur lait de chaux frais et sur lait de chaux vieilli, donc après 14 jours de stockage sont reportées dans le Tableau 2 selon les protocoles rédigés ci-dessus. Un lait de chaux est considéré de bonne qualité en termes de viscosité lorsque sa viscosité sur frais à 5 s⁻¹ est inférieure à 800 cP et lorsque sa viscosité à 5 s⁻¹ après stockage de 14 jours est inférieure à 2000 cP, de préférence 1500cP et de manière particulièrement préférée 1300cP. La décantation après 24h de repos est également rapportée.

**Tableau 1 : caractéristiques de l'hydrate utilisé**

| Ca(OH)₂ (%) | C (%) | Al₂O₃ (%) | FeO (%) | MgO (%) | S (%) | SiO₂ (%) | X50 (µm) | X90 (µm) | X99 (µm) |
|---|---|---|---|---|---|---|---|---|---|
| 96,61% | 0,24% | 0,032% | 0,051% | 0,408% | 0,024% | 0,084% | 5,3 | 26,4 | 64,7 |

La distribution de particules choisie pour la série d'essais 1 à 3 est la suivante :

| D_{10 (µm)} | D_{25 (µm)} | D_{50 (µm)} | D_{90 (µm)} | D_{99 (µm)} |
|---|---|---|---|---|
| 1,1 | 2,1 | 5,3 | 26,4 | 64,7 |

**Tableau 2 : laits de chaux sans additifs**

| N° EX | Matière sèche (%) | Viscosité sur frais à 5 s-1 (cP) | Viscosité sur vieilli à 5 s-1 (cP) | Décantation après 24h de repos |
|---|---|---|---|---|
| 2.1 | 20 | 24 | 529 | 30% |
| 2.2 | 35 | 1048 | 8524 | 5% |
| 2.3 | 50 | >10000 | >10000 | <2% |

On remarque que des laits de chaux à faible teneur en matière sèche ont une faible viscosité ce qui contribue à induire une décantation au repos très importante et qui nécessite une agitation régulière et constante à l'échelle industrielle pour éviter tout dépôt et bouchage dans les tuyauteries. Augmenter la teneur en matière sèche d'un lait de chaux réduit cette propension à la décantation en augmentant la viscosité et en augmentant le nombre de particules par unité de volume, mais il y a une limite à ne pas dépasser pour éviter tout problème lié à une viscosité trop élevée (au-dessus de 1300 cP ou m.Pa.s). Faire des laits de chaux sans additif est dès lors problématique au-delà de 30 % de teneur en matière sèche.

### Série d'essais 2: Essais avec un seul additif et comparaison avec deux additifs

Des laits de chaux à 50 % de teneur en matière sèche ont été préparés selon la méthode décrite ci-dessus, mais cette fois avec un seul des additifs utilisés.
- polyether polycarboxylate utilisé dans la présente invention est constitué de :
   - 13 % en poids de monomères d'acide méthacrylique totalement neutralise au NaOH
   - 87 % en poids de monomères polyether methacrylate dans lequel le polyether comporte 60 unités d'oxide d'ethylène:
      Il possède une masse moléculaire moyenne en poids (Mw) de 165000 une polydispersité Mw/Mn de 1.35.
      Le polyéther polycarboxylate est utilisé en mélange dans de l'eau contenant 60 % en poids d'eau et 40 % en poids de polyéther polycarboxylate.
- Le carbohydrate utilisé dans la présente invention est du saccharose en mélange avec de l'eau comprenant 35 % en poids d'eau et 65 % en poids de saccharose.

Les concentrations des additifs sont indiquées en pourcent en poids du principe actif de l'additif.

Ainsi, 1 % en poids du mélange eau/polyether polycarboxylate contient donc 0.4 % en poids de polyether polycarboxylate et 1 % en poids du mélange eau/saccharose contient donc 0.65 % en poids de saccharose.

Le but est de réduire la viscosité sur frais, mais aussi celle du lait de chaux stocké pendant 14 jours en conditions industrielles, tout en gardant une décantation faible. L'hydrate standard de l'exemple 1 a été utilisé. Les mêmes caractéristiques que celle de l'exemple 1 sont rapportées dans le Tableau 3. Seuls les laits de chaux fabriqués à l'aide de deux additifs font l'objet de la présente invention. Les autres laits de chaux sont présentés à titre de comparaison car ils ne contiennent qu'un seul additif.

**Tableau 3 : Laits à 50 % de matière sèche avec un seul additif produisant une décantation inférieure à 2 % après 24 h de repos**

| N° EX | Additif | Contenu en additif | Viscosité sur frais à 5 s-1 (cP) | Viscosité sur vieilli à 5 s-1 (cP) |
|---|---|---|---|---|
| 3.1 | - | 0% | >10000 | >10000 |
| 3.2 | polymère carboxylate | 0,5% | 135 | >10000 |
| 3.3 | polymère carboxylate | 1,0% | 67 | 1627 |
| 3.4 | polymère carboxylate | 1,5% | 40 | 1402 |
| 3.5 | polymère carboxylate | 2,0% | 26 | 1349 |
| 3.6 | Carbohydrates | 0,5% | 2549 | 3722 |
| 3.7 | Carbohydrates | 1,0% | 1968 | 2170 |
| 3.8 | Carbohydrates | 1,5% | 1423 | 1651 |
| 3.9 | Carbohydrates | 2,0% | 881 | 1421 |

L'ajout d'additifs seuls permet d'obtenir de bons résultats de viscosité sur lait de chaux frais, ainsi que de bons comportements en termes de décantation, à cause de la haute teneur en matière sèche. Toutefois, aucun des additifs seuls ne permet de garder la viscosité du lait de chaux stocké pendant 14 jours en conditions industrielles en dessous de la valeur recommandée de 1300 cP à 5 s⁻¹.

**Tableau 4 : Laits à 50 % de matière sèche avec deux additifs produisant une décantation inférieure à 2 % après 24 h de repos**

| N° EX | Polymères carboxylates | Carbohydrates | Viscosité sur frais à 5 s-1 (cP) | Viscosité sur vieilli à 5 s-1 (cP) |
|---|---|---|---|---|
| 4.1 | 0,05% | 0,05% | 1853 | 3458 |
| 4.2 | 0,1% | 0,1% | 745 | 1253 |
| 4.3 | 0,2% | 0,2% | 642 | 1041 |
| 4.4 | 0,3% | 0,3% | 329 | 892 |
| 4.5 | 0,5% | 0,5% | 36 | 197 |

Seuls les laits de chaux n°4.2, 4.3, 4.4 et 4.5 du tableau 4, objets de la présente invention, permettent d'atteindre l'objectif de viscosité inférieure à 1300 cP à 5s-1 sur vieilli avec une concentration globale en additifs inférieure ou égale à 1 %.

### Série d'essais 3 : Essais avec deux additifs et différentes concentrations

Au vu de ces résultats, les additifs polyether polycarboxylate et saccharose ont été utilisés pour réaliser des laits de chaux, toujours à partir de l'hydrate de calcium de l'exemple 1, de concentrations différentes, dans le but de montrer quelle est la limite de synergie de l'utilisation de ces deux additifs de manière concomitante en fonction de la teneur en matière sèche. Certains laits de chaux des exemples précédents sont repris dans les tableaux.

Le tableau 5 représente les concentrations des deux additifs nécessaires pour des concentrations de plus en plus élevées en matière sèche.

On observe que pour des concentrations croissantes de matière sèche, des concentrations croissantes d'additifs de dispersion sont également nécessaires.

**Tableau 5 : Laits de chaux avec utilisation des deux additifs**

| N°Ex | Matière sèche (%) | Polymères carboxylates | Carbohydrates | Viscosité sur frais à 5 s-1 (cP) | Viscosité sur vieilli à 5 s-1 (cP) | Décantation après 24h de repos |
|---|---|---|---|---|---|---|
| 5.1 | 40 | 0,1% | 0,1% | 221 | 751 | 4,7% |
| 5.2 | | 0,2% | 0,2% | 103 | 246 | 3,2% |
| 5.3 | | 0,5% | 0,5% | 8 | 9 | <2% |
| 5.4 | 45 | 0,1% | 0,1% | 453 | 1092 | <2% |
| 5.5 | | 0,2% | 0,2% | 391 | 785 | <2% |
| 5.6 | | 0,3% | 0,3% | 244 | 516 | <2% |
| 5.7 | | 0,5% | 0,5% | 22 | 123 | <2% |
| 5.8 | 50 | 0,05% | 0,05% | 1853 | **3458** | <2% |
| 5.9 | | 0,1% | 0,1% | 745 | 1253 | <2% |
| 5.10 | | 0,2% | 0,2% | 642 | 1041 | <2% |
| 5.11 | | 0,3% | 0,3% | 329 | 892 | <2% |
| 5.12 | | 0,5% | 0,5% | 36 | 197 | <2% |
| 5.13 | 55 | 0,5% | 0,5% | 158 | **5463** | <2% |
| 5.14 | | 0,7% | 0,7% | 146 | 947 | <2% |
| 5.15 | | 1,0% | 1,0% | 127 | 57 | <2% |
| 5.16 | 60 | 0,5% | 0,5% | 400 | **>10000** | <2% |
| 5.17 | | 0,7% | 0,7% | 387 | **4531** | <2% |
| 5.18 | | 1,0% | 1,0% | 308 | 678 | <2% |

Les exemples avec 40 et 45 % de matière sèche sont donnés à titre comparatif

**Tableau 6 : Laits de chaux avec utilisation des deux additifs dans des proportions différentes**

| N° | Matière sèche (%) | Polymères carboxylates | Carbohydrates | Viscosité sur frais à 5 s-1 (cP) | Viscosité sur vieilli à 5 s-1 (cP) | Décantation après 24h de repos |
|---|---|---|---|---|---|---|
| 6.1 | 40 | 0,1% | 0,1% | 221 | 751 | 4,7% |
| 6.2 | | 0,1% | 0,2% | 189 | 428 | 3,8% |
| 6.3 | 45 | 0,1% | 0,1% | 453 | 1092 | <2% |
| 6.4 | | 0,1% | 0,2% | 415 | 897 | <2% |
| 6.5 | | 0,1% | 0,3% | 398 | 826 | <2% |
| 6.6 | 50 | 0,1% | 0,1% | 745 | 1253 | <2% |
| 6.7 | | 0,1% | 0,2% | 923 | 1148 | <2% |
| 6.8 | | 0,2% | 0,2% | 642 | 1041 | <2% |
| 6.9 | | 0,2% | 0,3% | 571 | 981 | <2% |
| 6.10 | | 0,2% | 0,5% | 494 | 929 | <2% |
| 6.11 | 55 | 0,5% | 0,5% | 158 | **5463** | <2% |
| 6.12 | | 0,5% | 0,7% | 155 | **3431** | <2% |
| 6.13 | | 0,7% | 0,7% | 146 | 947 | <2% |
| 6.14 | | 0,7% | 1,0% | 139 | 520 | <2% |
| 6.15 | | 0,7% | 1,5% | 131 | 306 | <2% |
| 6.16 | 60 | 0,7% | 0,7% | 387 | **4531** | <2% |
| 6.17 | | 0,7% | 1,0% | 342 | **2421** | <2% |
| 6.18 | | 0,7% | 1,5% | 339 | 1194 | <2% |
| 6.19 | | 0,7% | 2,0% | 320 | 946 | <2% |

Les exemples avec 40 et 45 % de matière sèche sont donnés à titre comparatif

### Série d'essais 4 : Essais avec deux additifs et caractéristiques granulométriques

Au vu de ces résultats, différents laits de chaux ont été réalisés à l'aide de différents hydrates de chimie proche à celle décrite dans l'exemple 1, mais avec une répartition de tailles granulométriques différentes. Les laits de chaux résultants sont caractérisés en termes de granulométrie laser (PSD) et sont comparés à un lait de chaux issu des exemples précédents.

**Tableau 7 : lait de chaux avec 50 % de matière sèche et avec des distributions de particules différentes à différentes concentrations de dispersants et montrant moins de 2 % de décantation après 24h**

| EX N° | Polymères carboxylates | Carbohydrates | Viscosité sur frais à 5 s-1 (cP) | Viscosité sur vieilli à 5 s-1 (cP) | D_{10 (µm)} | D_{25 (µm)} | D_{50 (µm)} | D_{90 (µm)} | D_{99 (µm)} |
|---|---|---|---|---|---|---|---|---|---|
| 7.1 | 0,5% | 0,5% | 36 | 197 | 1,1 | 2,1 | 5,3 | 26,4 | 64,7 |
| 7.2 | 0,5% | 0,5% | 33 | 189 | 1,0 | 1,7 | 4,3 | 36,7 | 70,1 |
| 7.3 | 0,5% | 0,5% | 59 | 251 | 1,0 | 1,6 | 3,23 | 18,1 | 45,2 |
| 7.4 | 0,5% | 0,5% | 231 | 824 | 0,8 | 1,3 | 2,4 | 8,0 | 16,8 |
| 7.5 | 0,5% | 0,5% | 548 | 1453 | 0,7 | 1,1 | 2,2 | 6,0 | 10,4 |
| 7.6 | 0.5% | 0.5% | 742 | **1786** | 0,6 | 1,0 | 1.9 | 5.3 | 9.5 |
| 7.7 | 1,0% | 1,0% | < 30 | 122 | 1,1 | 2,1 | 5,3 | 26,4 | 64,7 |
| 7.8 | 1,0% | 1,0% | < 30 | 103 | 1,0 | 1,7 | 4,3 | 36,7 | 70,1 |
| 7.9 | 1,0% | 1,0% | < 30 | 143 | 1,0 | 1,6 | 3,23 | 18,1 | 45,2 |
| 7.10 | 1,0% | 1,0% | 206 | 791 | 0,8 | 1,3 | 2,4 | 8,0 | 16,8 |
| 7.11 | 1,0% | 1,0% | 425 | 1350 | 0,7 | 1,1 | 1.9 | 5.3 | 9.5 |
| 7.12 | 1,5% | 1,5% | < 30 | 83 | 1,1 | 2,1 | 5,3 | 26,4 | 64,7 |
| 7.13 | 1,5% | 1,5% | < 30 | 74 | 1,0 | 1,7 | 4,3 | 36,7 | 70,1 |
| 7.14 | 1,5% | 1,5% | < 30 | 95 | 1,0 | 1,6 | 3,23 | 18,1 | 45,2 |
| 7.15 | 1,5% | 1,5% | 187 | 474 | 0,8 | 1,3 | 2,4 | 8,0 | 16,8 |
| 7.16 | 1,5% | 1,5% | 305 | 1305 | 0,7 | 1,1 | 1.9 | 5.3 | 9.5 |

Les exemples 7.5 et 7.6 ainsi que 7.11 et 7. 16 avec les concentrations de polyether polycarboxylate et carbohydrate (0.5 + 0.5% ; 1.0 + 1.0% and 1.5 + 1.5%) sont des exemples comparatifs montrant que des particules trop fines ont tendance à augmenter la viscosité du mélange au-delà d'un seuil considéré comme acceptable. Pour un D₉₉ aux alentours de 15 µm and a D₅₀ aux alentours de 2 la viscosité sur échantillon vieilli évolue vers un seuil inacceptable, ce qui peut être partiellement compensé par l'augmentation de la concentration de carbohydrate et de polyether polycarboxylate. L'homme du métier tentera néanmoins de limiter les additifs pour des raisons économiques.

## Revendications

1. Lait de chaux comportant :
- au moins 50 % en poids de matière sèche constituée de chaux hydratée ;
- 0,1 à 3 % en poids sec de dispersants carbohydrates sélectionnés parmi le groupe des monosaccharides, disaccharides, oligosaccharides, leur forme alcoxydée et leurs dérivés obtenus par oxydation ou hydrogénation,
- 0,1 à 3 % en poids sec d'un dispersant de la famille des copolymères polyéthers polycarboxyliques obtenus par la copolymérisation de monomères insaturés ethyleniques ayant entre 15 et 100 moles de groups oxyalkyléniques C2-C3 et des monomères insaturés éthyléniques d'acides mono ou dicarboxyliques, et/ou leurs sels et/ou leurs esters alkyles C1-C4 dans lequel la proportion entre le dispersant de type carbohydrate et le dispersant de type copolymère est compris entre 5:1 et 1:1 et de préférence 3:1 et 1:1 ;
la distribution de particules de chaux hydratée étant **caractérisée par** :
- au moins 99 % des particules ayant une taille inférieure à 100 µm, de préférence 75 µm ;
- au moins 75 % des particules ayant une taille supérieure à 1,2 µm.
ledit lait de chaux produisant une décantation inférieure à 2 % après 24 h de repos,

2. Lait de chaux selon la revendication 1, dans lequel la distribution des particules de chaux hydratée est **caractérisée par** :
- au moins 90 % des particules ayant une taille inférieure à 50 µm ;
- au moins 90 % des particules ayant une taille supérieure ou égale à 0,8 µm.

3. Lait de chaux selon la revendication 1 ou 2, dans lequel la distribution des particules de chaux hydratée est **caractérisée par** :
- au moins 90 % des particules ayant une taille inférieure à 50 µm;
- au moins 50 % des particules ayant une taille inférieure à 15 µm, de préférence inférieure à 8 µm ;
- au moins 90 % des particules ayant une taille supérieure ou égale à 0,8 µm.

4. Lait de chaux selon l'une quelconque des revendications précédentes, dans lequel la proportion de matière sèche est comprise entre 50 et 60 % en poids, ledit lait présentant une viscosité mesurée à 25 °C avec un taux de cisaillement de 5 s-1 inférieure à 1500 cP (1,5 Pa.s), de préférence inférieure à 1300 cP (1,3 Pa.s) après 14 jours de vieillissement.

5. Lait de chaux selon l'une quelconque des revendications précédentes, dans lequel la proportion de matière sèche est comprise entre 50 et 60 % en poids, ledit lait présentant une viscosité mesurée à 25 °C avec un taux de cisaillement de 5 s⁻¹, sur le lait de chaux frais, inférieure à 800 cP (0,8 Pa.s).

6. Lait de chaux selon l'une quelconque des revendications précédentes dans lequel le copolymère polyéthers polycarboxylique est le produit de réaction d'au moins un monomère éthylénique insaturé comprenant:
- entre 75 and 95 % molaire de C1-C3 alkoxypolyoxyalkylene (meth)acrylate et C1-C3 alkoxypolyoxyalkylene maléate dans lesquels le degré de polymérisation de l'oxyalkylene est compris entre 15 and 100;
- entre 5 et 25 % molaire d'acide (méth)acrylic, acide itaconique, acide crotonique, acide maléique, acide fumarique et les sels d'ammonium et de leurs métaux alcalins.

7. Lait de chaux selon l'une quelconque des revendications précédentes dans lequel l'alkoxypolyoxyalkylene du copolymère dispersant comprend des unités oxyalkylene sélectionné parmis l'oxyethylene et l'oxypropylene.

8. Lait de chaux selon l'une quelconque des revendications précédentes dans lequel le groupe acide du copolymère est obtenu par la copolymérisation d'acide (meth) acrylique.

9. Lait de chaux selon l'une quelconque des revendications précédentes dans lequel la polydispersité de la masse moléculaire dudit copolymère est comprise entre 1,1 et 1,6, de préférence entre 1,3 et 1,4.

10. Lait de chaux selon l'une quelconque des revendications précédentes dans lequel le dispersant de type copolymère a une viscosité moyenne comprise entre 0,2 et 1 Pa.s, de préférence entre 0,3 et 0,8 Pa.s et de manière particulièrement préférée entre 0,3 et 0,6 Pa.s mesurée à 25°C avec un taux de cisaillement comprise entre 0,1 et 400 s⁻¹.

11. Procédé de préparation d'un lait de chaux selon l'une quelconque des revendications 1 à 10, selon lequel on met en contact un liquide comportant les dispersants et une chaux vive ou hydratée permettant d'obtenir un lait de chaux selon l'une quelconque des revendications précédentes.

12. Utilisation du lait de chaux selon l'une quelconque des revendications 1 à 10 pour la neutralisation des rejets acides, en particulier dans les fumées et le traitement des boues.
